# EUROPÄISCHE PATENTSCHRIFT

(11) **EP 3 405 738 B1**
(45) Veröffentlichungstag und Bekanntmachung des Hinweises auf die Patenterteilung: **07.07.2021**
(21) Anmeldenummer: 17701792.8
(22) Anmeldetag: 18.01.2017
(51) Int. Cl.: F28F 21/08, B23K 26/20, F28F 9/18

(54) **VERFAHREN ZUM VERBINDEN VON ROHREN EINES ROHRBÜNDELWÄRMETAUSCHERS MIT EINEM ROHRBODEN DES ROHRBÜNDELWÄRMETAUSCHERS**
METHOD OF CONNECTING TUBES OF A TUBE BUNDLE HEAT-EXCHANGER WITH A TUBE BASE OF THE TUBE BUNDLE HEAT-EXCHANGER
PROCÉDÉ DE RACCORDEMENT DE TUBES D'UN ÉCHANGEUR THERMIQUE À FAISCEAU TUBULAIRE À UNE PLAQUE TUBULAIRE D'UN ÉCHANGEUR THERMIQUE À FAISCEAU TUBULAIRE

(30) Priorität: 19.01.2016 EP 16000127
(43) Veröffentlichungstag der Anmeldung: 28.11.2018
(73) Patentinhaber: Linde GmbH, 82049 Pullach (DE)
(72) Erfinder: SEEHOLZER, Christoph, 83308 Trostberg (DE); WIMMER, Georg, 84577 Tüßling (DE)
(74) Vertreter: Meilinger, Claudia Sabine
(86) Internationale Anmeldenummer: PCT/EP2017/025012
(87) Internationale Veröffentlichungsnummer: WO 2017/125253

(56) Entgegenhaltungen:
- DE-A1-102006 031 606
- DE-A1-102012 008 940
- JP-A- H1 071 480

## Beschreibung

Die Erfindung betrifft ein Verfahren zum Verbinden von Rohren eines Rohrbündelwärmetauschers mit einem Rohrboden des Rohrbündelwärmetauschers sowie eine Vorrichtung zu dessen Durchführung.

### Stand der Technik

Rohrbündelwärmetauscher sind dazu eingerichtet, Wärme von einem ersten Fluid auf ein zweites Fluid zu übertragen. Zu diesem Zweck weist ein Rohrbündelwärmetauscher zumeist einen Hohlzylinder auf, in dessen Innerem eine Vielzahl von Rohren angeordnet ist. Eines der beiden Fluide kann durch die Rohre geleitet werden, das andere Fluid durch den Hohlzylinder, insbesondere um die Rohre herum. Die Rohre sind mit ihren Enden entlang ihres Umfangs an Rohrböden des Rohrbündelwärmetauschers befestigt.

Im Zuge des Herstellungsprozesses eines Rohrbündelwärmetauschers werden die Rohre mit ihren Enden beispielsweise stoffschlüssig mit den Rohrböden verbunden. Je nach Anzahl der Rohre werden dabei bis zu mehrere zehntausend Rohr-Rohrboden-Verbindungen hergestellt.

Aus der DE 10 2006 031 606 A1 ist ein Verfahren zur Herstellung eines Wärmetauschers zur Abgaskühlung für ein Kraftfahrzeug bekannt, bei welchem mehrere Dutzend Flachrohre mit Böden durch Löten, Kleben, Elektronenstrahlschweißen oder mittels Laserstrahlschweißen stoffschlüssig verbunden werden. Beim Laserstrahlschweißen wird der Vorschubbewegung des Laserstrahls eine Pendelbewegung überlagert. Diese Pendelbewegung erfolgt im Wesentlichen in senkrechter Richtung zu der Vorschubrichtung. Die Böden sind aus einem Metall, insbesondere Edelstahl oder Aluminium ausgebildet. Die Rohre bestehen aus Faserverbundwerkstoffen oder Metall, wie Stahl, Edelstahl oder Aluminium.

Es ist wünschenswert, eine Möglichkeit bereitzustellen, um Rohre eines Rohrbündelwärmetauschers mit einem Rohrboden des Rohrbündelwärmetauschers auf aufwandsarme und kostengünstige Weise in hoher Qualität miteinander zu verbinden.

### Offenbarung der Erfindung

Erfindungsgemäß werden ein Verfahren zum Verbinden von Rohren eines Rohrbündelwärmetauschers mit einem Rohrboden des Rohrbündelwärmetauschers mit den Merkmalen des unabhängigen Patentanspruchs 1 vorgeschlagen. Vorteilhafte Ausgestaltungen sind Gegenstand der Unteransprüche sowie der nachfolgenden Beschreibung. Ausführungen und Vorteile des erfindungsgemäßen Verfahrens ergeben sich aus der nachfolgenden Beschreibung in analoger Art und Weise.

Die Rohre werden mittels Laserschweißens mit dem Rohrboden stoffschlüssig verbunden. Im Zuge des Laserschweißens wird ein Laserstrahl erzeugt und auf eine zu schweißende Stelle in einem Verbindungsbereich zwischen Rohr und Rohrboden fokussiert. In diesem Verbindungsbereich soll das entsprechende Rohr mit dem Rohrboden stoffschlüssig verbunden werden. Eine entsprechende Schweißnaht zwischen Rohr und Rohrboden wird in diesem Verbindungsbereich erzeugt.

Der fokussierte Laserstrahl wird gemäß einer ersten Bewegung, bzw. einer Hauptbewegung oder Vorschubbewegung, über den Verbindungsbereich hinweg bewegt. Diese erste Bewegung erfolgt insbesondere entlang einer ersten Richtung (Vorschubrichtung) über den Verbindungsbereich hinweg. Diese erste Richtung entspricht insbesondere einer Haupterstreckungsrichtung der zu erzeugenden Schweißnaht. Dieser ersten Bewegung des Laserstrahls wird eine zweite Bewegung, insbesondere eine sog. Überlagerungsbewegung überlagert, die unterschiedlich zu der ersten Bewegung ist. Insbesondere erfolgt diese zweite Bewegung entlang einer zweiten Richtung, die insbesondere unterschiedlich zu der ersten Richtung ist. Insbesondere kann eine Oszillationsbewegung als diese zweite Bewegung ausgeführt werden. Um die einzelnen Rohre mit dem Rohrboden zu verbinden, wird erfindungsgemäß somit ein Laserschweißen durchgeführt, bei dem zwei Bewegungen des Laserstrahls im Sinne der Vektorgeometrie überlagert werden. Zweckmäßigerweise kann ein sogenanntes Laserschweißen mit Strahloszillation durchgeführt werden. Zudem wird durch die zweite Bewegung das Schmelzbad und dessen Eigenschaften flexibel beeinflusst. Insbesondere kann eine Schmelzbaddynamik flexibel gezielt beeinflusst werden und/oder eine entstehende Dampfkapillare gezielt modifiziert werden, beispielsweise zu einer länglichen oder ovalen Form hin. Aufgrund einer derartigen veränderten Schmelzbaddynamik bzw. einer derartigen Modifizierung der Dampfkapillare kann insbesondere eine Ausgasung begünstigt werden. Durch potentielle Verschmutzungen in einem Spalt zwischen Rohr und Rohrboden kann die Gefahr bestehen, dass es zu einer Porosität im Schweißgut kommt. Durch die Beeinflussung der Schmelzbaddynamik und die Modifizierung der Dampfkapillare kann diese Gefahr stark vermindert werden.
Zur genannten Veränderung der Schmelzbaddynamik bzw. der Modifizierung der Dampfkapillare eignet sich als zweite Bewegung erfindungsgemäß eine kreisförmige oder elliptische Bewegung, wobei hierbei transversale Auslenkungen von 0,15 - 0,25 mm insbesondere 0,23 mm, und longitudinale Auslenkungen von 0,15 - 0,25 mm, insbesondere 0,23 mm, besonders vorteilhaft sind. Die Frequenz der zweiten Bewegung beträgt hierbei 3000 - 4500 Hz, insbesondere 3500 Hz.

Als Laserschweißen oder Laserstrahlschweißen ist in diesem Zusammenhang insbesondere ein Prozess zu verstehen, wie er gemäß der DIN EN ISO 4063 ("Schweißen und verwandte Prozesse - Liste der Prozesse und Ordnungsnummern") als Prozess 52 definiert ist. Dabei wird durch einen Laserstrahl Energie in zu verbindende Werkstücke eingebracht.

Im Zuge des Laserschweißen wird der Laserstrahl durch einen zweckmäßigen Laser erzeugt, beispielsweise durch einen CO₂-Laser, CO-Laser, Festkörperlaser, insbesondere Nd:YAG-Laser, Nd-Glas-Laser, Erbium-YAG-Laser, Scheibenlaser, Faserlaser und/oder Diodenlaser. Der erzeugte Laserstrahl wird durch optische Elemente wie Linsen und/oder Spiegel, z.B. Hohlspiegel, geführt und auf eine zu schweißende Stelle im Verbindungsbereich fokussiert.

Eine mögliche Vorrichtung zum Laserschweißen ist zum Verbinden von Rohren eines Rohrbündelwärmetauschers mit einem Rohrboden des Rohrbündelwärmetauschers entsprechend eingerichtet und weist einen Laser zum Erzeugen eines Laserstrahls, ein erstes Steuergerät zur Ansteuerung eines ersten Verfahrmechanismus zum Erzeugen einer ersten Bewegung des Laserstrahls und ein zweites Steuergerät zur Ansteuerung eines zweiten Verfahrmechanismus zum Erzeugen einer zweiten Bewegung des Laserstrahls auf, wobei das erste und das zweite Steuergerät dazu eingerichtet sind, ein erfindungsgemäßes Verfahren durchzuführen. Hierbei können das erste und das zweite Steuergerät in einem gemeinsamen Steuergerät kombiniert untergebracht sein. Es kann auch zweckdienlich sein, den ersten und den zweiten Verfahrmechanismus in einen gemeinsamen Verfahrmechanismus zu kombinieren. Eine Trennung in ein erstes und ein zweites Steuergerät bzw. einen ersten und einen zweiten Verfahrmechanismus ist insbesondere dann sinnvoll, wenn eine bestehende Vorrichtung zum Laserschweißen nachgerüstet werden soll, um ein erfindungsgemäßes Verfahren durchzuführen.

Eine mögliche Vorrichtung zum Laserschweißen bzw. ein entsprechendes Laserschweißgerät weist insbesondere den Laser und ein zweckmäßiges Gehäuse auf, in welchem die optischen Elemente angeordnet sind. Der Laser kann ebenfalls in diesem Gehäuse angeordnet sein oder auch außerhalb des selbigen, wobei der Laserstrahl in diesem Fall in das Gehäuse eingekoppelt wird. Beispielsweise können mehrere oder alle optischen Elemente in einem Laserkopf angeordnet sein. Der Laserstrahl wird in diesen Laserkopf eingekoppelt.

Die erste und zweite Bewegung des Laserstrahls und somit das Herstellen der Rohr-Rohrboden-Verbindung können durch eine zweckmäßige automatisierte Steuerung durchgeführt werden. Das Laserschweißen mit Strahloszillation kann somit insbesondere auf einfache Weise automatisiert durchgeführt werden. Die automatisierte Steuerung steuert insbesondere zweckmäßige Elemente der Vorrichtung zum Laserschweißen an, um den Laserstrahl zu fokussieren und entsprechend zu bewegen.

Der fokussierte Laserstrahl trifft auf der zu schweißenden Stelle in dem Verbindungsbereich auf. Das jeweilige Rohr und/oder der Rohrboden werden in einem Bereich um diese zu schweißende Stelle herum aufgeschmolzen, wodurch das Schmelzbad erzeugt wird.

Eine spezielle Ausführung des Laserschweißens ist das sogenannten Tiefschweißen. Dabei liegt die Intensität des erzeugten Laserstrahls über einem vorbestimmten Grenzwert, beispielsweise über einem Grenzwert von 1 MW/cm², 2 MW/cm² oder 4 MW/cm². Durch diese vergleichsweise hohe Intensität verdampft ein Teil des Werkstoffs in dem Schmelzbad, wodurch ein Metalldampf erzeugt wird. Durch weitere Absorption der Laserenergie wird dieser Metalldampf zumindest teilweise ionisiert, wodurch ein laserinduziertes Plasma bzw. Metalldampfplasma erzeugt wird. Durch die hohe Intensität des Laserstrahls bildet sich in der Schmelze weiterhin eine Schweißkapillare bzw. Dampfkapillare aus, welche auch als "keyhole" bezeichnet wird. Diese Dampfkapillare ist als ein Hohlraum ausgebildet, welcher mit dem Metalldampfplasma gefüllt ist. Da der Absorptionsgrad des Metalldampfplasmas insbesondere höher ist als der Absorptionsgrad der Schmelze, kann die Energie des Laserstrahls nahezu vollständig in das jeweilige Rohr bzw. den Rohrboden eingebracht werden.

Wenn der Laserstrahl über den Verbindungsbereich bewegt wird, läuft der geschmolzene Werkstoff hinter dem Laserstrahl zusammen und erstarrt zu der Schweißnaht. Im Zuge der Hauptbewegung wird der Laserstrahl entlang der ersten Richtung bewegt, um das jeweilige Rohr entlang seines Umfangs mit dem Rohrboden zu verbinden und um somit die entsprechende Schweißnaht um das Rohr herum zu erzeugen. Die Hauptbewegung stellt somit insbesondere eine kreisförmige Bewegung um das Rohr herum bzw. entlang dessen Umfangs dar.

Insbesondere bei hohen Leistungen des Laserstrahls kann es sich als schwierig erweisen, den Laserstrahl präzise entlang von Punkten im Verbindungsbereich zu führen, an welchen sich Rohr und Rohrboden berühren, und das Schmelzbad präzise entlang dieser Punkte zu erzeugen. Würde keine Überlagerungsbewegung durchgeführt werden und würde das Schmelzbad ausschließlich im Zuge der Hauptbewegung erzeugt werden, kann sich eine präzise Erzeugung des Schmelzbads daher als schwierig erweisen.

Durch die zusätzliche zweite Bewegung bzw. Überlagerungsbewegung, welche der Hauptbewegung überlagert wird, kann das Schmelzbad mit höherer Flexibilität erzeugt werden. Durch diese überlagerte zweite Bewegung kommt es nicht ausschließlich darauf an, den Laserstrahl im Zuge der Hauptbewegung möglichst exakt auf definierte Punkte im Verbindungsbereich zu richten und möglichst exakt entlang der ersten Richtung zu verfahren. Stattdessen kann der Laserstrahl insbesondere über einen ausgedehnten, breiten Bereich um diese entsprechenden Punkte herum bewegt bzw. oszilliert werden. Durch die Überlagerungsbewegung kann auf einfache Weise ein breiteres Schmelzbad bzw. ein breiterer Aufschmelzbereich erzeugt werden, als es im Zuge der Hauptbewegung möglich wäre.

Es ergeben sich somit insbesondere zusätzliche Freiheitsgrade, um den Laserstrahl auf den Verbindungsbereich zu richten und um das Schmelzbad zu erzeugen. Insbesondere wirkt es sich nicht negativ auf die herzustellende Verbindung zwischen Rohr und Rohrboden aus, wenn der Laserstrahl im Zuge der Haupt- und/oder Überlagerungsbewegung nicht absolut exakt entlang einer jeweiligen vorgegebenen Bahn und somit nicht absolut exakt entlang der jeweiligen Richtung geführt werden kann. Bei einer reinen Hauptbewegung würde dies sehr viel stärker ins Gewicht fallen, da dort das Schmelzbad ausschließlich durch die Hauptbewegung erzeugt wird. Wenn hingegen durch die Kombination von Haupt- und Überlagerungsbewegung ein breites Schmelzbad erzeugt wird, fallen leichte Abweichungen der einzelnen Bewegungen von der jeweiligen vorgegeben Bahn nicht oder kaum ins Gewicht und beeinflussen das Schmelzbad und die herzustellende Verbindung nicht negativ.

Durch die erste Bewegung wird vorteilhafterweise die Haupterstreckungsrichtung der Schweißnaht bzw. des Schmelzbads vorgegeben. Die erste Bewegung verläuft somit insbesondere entlang der Stellen, an welchen sich Rohr und Rohrboden berühren, insbesondere entlang des Verbindungsbereichs bzw. entlang einer Haupterstreckungsrichtung des Verbindungsbereichs.

Vorzugsweise wird durch die zweite Bewegung eine Breite der Schweißnaht bzw. des Schmelzbads vorgegeben, also insbesondere eine Ausdehnung der Schweißnaht bzw. des Schmelzbads senkrecht zu der ersten Bewegungsrichtung bzw. senkrecht zu der Haupterstreckungsrichtung der Schweißnaht. Insbesondere kann die Breite der Schweißnaht bzw. des Schmelzbads durch die zweite Bewegung bewusst beeinflusst und weiter insbesondere auf einen vorbestimmten Wert eingestellt werden.

Gemäß einer vorteilhaften Ausführungsform werden die erste Bewegung und/oder die zweite Bewegung durch Bewegung einzelner optischer Elemente in einem Strahlengang des Laserstrahls erzeugt. Einzelne optische Elemente, insbesondere Spiegel, können zu diesem Zweck verschoben, verschwenkt, gedreht und/oder gekippt werden. Insbesondere kann ein erster Spiegel vorgesehen sein, welcher um eine erste Achse, beispielsweise um eine vertikale Achse, gedreht bzw. gekippt werden kann, und weiterhin kann ein zweiter Spiegel vorgesehen sein, der drehbar um eine zweite Achse ist. Diese zweite Achse kann insbesondere senkrecht zu der ersten Achse verlaufen und beispielsweise eine horizontale Achse sein.

Alternativ oder zusätzlich können die erste Bewegung und/oder die zweite Bewegung vorteilhafterweise erzeugt werden, indem eine Vorrichtung zum Laserschweißen oder ein Teil einer Vorrichtung zum Laserschweißen bewegt wird. Dieser Teil oder die gesamte Laserschweißvorrichtung kann z.B. mittels eines mechanischen Verfahrmechanismus entsprechend bewegt werden, insbesondere verschoben, verschwenkt, gedreht und/oder gekippt. Im Zuge dessen kann beispielsweise ein System aus mehreren optischen Elementen gemeinsam bewegt werden. Beispielsweise können mehrere oder alle optische Elemente in dem Laserkopf angeordnet sein und dieser Laserkopf kann insbesondere bewegt werden. Somit kann insbesondere eine Vielzahl von optischen Elementen gemeinsam bewegt werden, um die Haupt- und/oder Überlagerungsbewegung zu erzeugen.

Gemäß einer vorteilhaften Ausführungsform kann die erste Bewegung erzeugt werden, indem ein Teil der Laserschweißvorrichtung bewegt wird, vorzugsweise ein Teil, in welchem eine Vielzahl von optischen Elementen angeordnet ist, z.B. der Laserkopf, und die zweite Bewegung kann erzeugt werden, indem einzelne optische Elemente in diesem Teil der Laserschweißvorrichtung bewegt werden. Die Haupt- und die Überlagerungsbewegung werden somit jeweils insbesondere mittels unterschiedlicher Mechanismen erzeugt. Der entsprechende Teil der Laserschweißvorrichtung und die entsprechenden einzelnen optischen Elemente können in diesem Fall insbesondere unabhängig voneinander angesteuert werden, um die zwei Bewegungen des Laserstrahls zu überlagern.

Vorzugsweise ist die erste Bewegung eine kreisförmige Bewegung, deren Radius im Wesentlichen oder ganz dem Radius eines Rohrs entspricht. Wie weiter oben bereits erläutert, verläuft die erste Bewegung somit vorzugsweise kreisförmig um das Rohr herum bzw. entlang dessen Umfangs. Die erste Richtung ist somit insbesondere tangential zum Umfang des Rohrs.

Erfindungsgemäß ist die zweite Bewegung eine kreisförmige und/oder elliptische Bewegung (Oszillationsbewegung). Der Radius bzw. die laterale Erstreckung dieser Oszillationsbewegung sollte kleiner als der Radius der Hauptbewegung sein, beispielsweise um den Faktor 5, 10, 15 oder darüber. Die zweite Bewegung kann zusätzlich bevorzugt eine translatorische Bewegung senkrecht zu der ersten Bewegung sein, wobei sich die Richtung dieser zweiten Bewegung alternierend umkehrt.

Gemäß der vorliegenden Erfindung sind die Rohre und/oder der Rohrboden jeweils aus einer Aluminium-Legierung gefertigt. Durch eine derartige Verwendung eines Aluminiumwerkstoffs, also einer Aluminium-Legierung, kann der Rohrbündelwärmetauscher insbesondere sehr viel leichter gebaut werden als ein Rohrbündelwärmetauscher aus anderen Werkstoffen, beispielsweise aus Stahl, Edelstahl oder Chrom-Nickel-Stahl. Der Rohrbündelwärmetauscher aus einem Aluminiumwerkstoff weist insbesondere eine um bis zu 50% geringere Masse auf als ein entsprechender Rohrbündelwärmetauscher, der z.B. aus Chrom-Nickel-Stahl gefertigt ist.

Für die Bearbeitung von Rohr bzw. Rohrboden aus einem Aluminiumwerkstoff gilt es zu beachten, dass Aluminium schnell mit Sauerstoff reagiert, wodurch sich Aluminiumoxid Al₂O₃ auf dem jeweiligen Werkstück, also auf dem Rohr und/oder dem Rohrboden, bildet. Auf den zu verschweißenden Werkstücken bildet sich somit eine Oxidschicht, welche insbesondere aufgebrochen bzw. aufgeschmolzen werden soll. Erst wenn diese Oxidschicht aufgebrochen wurde, kann ausreichend Energie in die Werkstücke eingebracht werden. Diese Oxidschicht besitzt zumeist einen sehr viel höheren Schmelzpunkt als das darunter liegende Werkstück, also als der unter der Oxidschicht liegende Teil des Rohrs bzw. des Rohrbodens. Beispielsweise kann die Oxidschicht einen Schmelzpunkt zwischen 2000°C und 2100°C besitzen, insbesondere im Wesentlichen 2050°C. Abhängig von der genauen Zusammensetzung kann das darunterliegende Werkstück hingegen einen Schmelzpunkt zwischen 500°C und 700°C, insbesondere zwischen 550°C und 660°C besitzen.

Durch das erfindungsgemäße Laserschweißverfahren wird diese Oxidschicht aufgebrochen und insbesondere komplett aufgeschmolzen werden, da beim Laserschweißen insbesondere eine vergleichsweise hohe Energiekonzentration durch den Laserstrahl erreicht werden kann. Es kann besonders effektiv Energie in das darunter liegende Werkstück eingebracht werden. Rohre und Rohrboden aus einem Aluminiumwerkstoff können somit auf besonders effektive, aufwandsarme und kostengünstige Weise durch das Laserschweißen miteinander verbunden werden.

Herkömmliche Schweißverfahren eignen sich nur bedingt, um Rohre und Rohrboden aus einem Aluminiumwerkstoff zu schweißen, da es zumeist nicht möglich ist, die komplette Oxidschicht ausreichend aufzuschmelzen. Nicht aufgeschmolzene Oxide der Oxidschicht verbleiben dabei im Schweißgut, was als Oxidfahnen bezeichnet wird. Derartige Oxidfahnen stellen eine eindeutige Trennung bzw. Fehlstelle im Schweißgut und in der Schweißnaht dar. Durch das Laserschweißen kann die Entstehung derartiger Oxidfahnen verhindert und eine saubere, reine Verbindung bzw. Schweißnaht kann ohne derartige Fehlstellen erzeugt werden.

Vorteilhafterweise kann im Zuge des Laserschweißens ein Zusatzwerkstoff zugeführt werden. Bevorzugt kann auch ein Schutzgas bzw. Prozessgas zugeführt werden, vorzugsweise Argon, Helium, Stickstoff, Kohlendioxid, Sauerstoff oder einer Mischung aus diesen genannten Gasen. Das Laserschweißen kann zweckmäßigerweise aber auch ohne Zufuhr von Schutzgas und/oder Zusatzwerkstoff durchgeführt werden.

Der herzustellende Rohrbündelwärmetauscher weist in seinem gefertigten, betriebsbereiten Zustand insbesondere eine Vielzahl von Rohren auf, die beispielsweise im Inneren eines Hohlzylinders angeordnet sein können. Der Rohrbündelwärmetauscher weist dabei mehrere hundert, mehrere tausend oder auch insbesondere mehrere zehntausend Rohre auf. Weiterhin ist in dem gefertigten Rohrbündelwärmetauscher insbesondere mindestens ein Rohrboden vorgesehen, der beispielsweise als eine Platte ausgebildet sein kann. Die Rohre sind an ihren Enden entlang ihres Umfangs fest mit diesem Rohrboden bzw. mit diesen Rohrböden verbunden. Der Rohrboden weist insbesondere Bohrungen bzw. Löcher auf, welche in ihrem Durchmesser den Durchmessern der Rohre entsprechen. Insbesondere ist jedes Rohr mit einem seiner Enden jeweils an einer dieser Bohrungen befestigt.

Im Zuge der Herstellung des Rohrbündelwärmetauschers werden die Rohre innerhalb des Rohrbündelwärmetauschers angeordnet und wie gewünscht ausgerichtet.

Daraufhin werden die Rohre mit dem Rohrboden bzw. mit den Rohrböden stoffschlüssig durch Laserschweißen mit Strahloszillation verbunden. Im Zuge der Herstellung werden auf diese Weise insbesondere bis zu 25000 Rohr-Rohrboden-Verbindungen mittels Laserschweißen hergestellt. Wenn alle Rohre mit dem Rohrboden stoffschlüssig verbunden wurden, kann ein Mantel um die Rohre herum angeordnet werden, welcher den Hohlzylinder bildet.

Vorteilhafterweise werden Rohre mit dem Rohrboden eines Geradrohr-Wärmetauschers miteinander verbunden. Die Rohre eines derartigen Geradrohr-Wärmetauschers verlaufen innerhalb des Hohlzylinders insbesondere geradlinig. In diesem Fall sind insbesondere zwei Rohrböden vorgesehen, welche an gegenüberliegenden Enden des Geradrohr-Wärmetauschers angeordnet sein können. Jedes Rohr ist mit jeweils einem seiner Enden dabei insbesondere an jeweils einem dieser zwei Rohrböden stoffschlüssig verbunden.

Vorzugsweise können auch Rohre mit dem Rohrboden eines U-Rohr-Wärmetauschers miteinander verbunden werden. Die Rohre eines derartigen U-Rohr-Wärmetauschers verlaufen innerhalb des Hohlzylinders insbesondere U-förmig. Ein derartiger Wärmetauscher kann insbesondere nur einen Rohrboden aufweisen. Da die Rohre in diesem Fall U-förmig gebogen sind, können sie jeweils mit ihren beiden Enden an demselben Rohrboden befestigt sein. Es ist auch denkbar, zwei nebeneinander angeordnete Rohrböden zu verwenden.

Bevorzugt können auch Rohre und Rohrböden eines gewickelten Rohrbündelwärmetauschers miteinander verbunden werden. Bei deinem derartigen gewickelten Rohrbündelwärmetauscher sind die Rohre innerhalb des Hohlzylinders insbesondere gewickelt, d.h. die Rohre verlaufen insbesondere kreis- bzw. spiralförmig um eine Achse, insbesondere um eine Längsachse bzw. Hauptausdehnungsachse des Rohrbündelwärmetauschers. Insbesondere kann im Inneren des Hohlzylinders ein Kernrohr vorgesehen sein, um welches die Rohre kreis- bzw. spiralförmig herum angeordnet sind. Ein derartiger gewickelter Rohrbündelwärmetauscher weist insbesondere zwei an gegenüberliegenden Enden angeordnete Rohrböden auf.

Durch das Laserschweißen der Rohr-Rohrboden-Verbindungen können darüber hinaus noch weitere Vorteile erzielt werden. Beim Laserschweißen kann eine vergleichsweise sehr hohe Schweißgeschwindigkeit erreicht werden, wodurch die Rohr-Rohrboden-Verbindungen besonders schnell und effizient hergestellt werden können. Weiterhin können mittels des Laserschweißens reproduzierbare Rohr-Rohrboden-Verbindungen mit gleichmäßiger Qualität hergestellt werden. Insbesondere können beim Laserschweißen vergleichsweise schmale Schweißnähte erzeugt werden, wodurch vermieden werden kann, dass sich Schweißnähte benachbarter Rohre beeinflussen.

Der vergleichsweise dicke Rohrboden (insbesondere im Vergleich zu den Wanddicken der Rohre) weist insbesondere eine vergleichsweise hohe Wärmeleitfähigkeit auf, so dass eingebrachte Wärme sehr schnell abgeleitet wird. Die vergleichsweise dünnen bzw. dünnwandigen Rohre weisen hingegen zweckmäßigerweise eine vergleichsweise geringe Wärmeleitfähigkeit auf, so dass eingebrachte Wärme nicht schnell abgeleitet werden kann. Durch das Laserschweißen kann ausreichend Energie in den Rohrboden eingebracht werden, um diesen trotz seiner vergleichsweise hohen Wärmeleitfähigkeit aufzuschmelzen. Dennoch kann gewährleistet werden, dass die Rohre nicht vorzeitig zurückgeschmolzen werden.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Kurze Beschreibung der Zeichnungen

- Figur 1: zeigt schematisch eine bevorzugte Ausgestaltung eines Rohrbündelwärmetauschers, der mittels einer bevorzugten Ausführungsform eines erfindungsgemäßen Verfahrens gefertigt wurde.
- Figur 2: zeigt schematisch eine bevorzugte Ausgestaltung einer Vorrichtung, die dazu eingerichtet ist, eine bevorzugte Ausführungsform eines erfindungsgemäßen Verfahrens durchzuführen.
- Figur 3: zeigt schematisch einen Teil einer bevorzugten Ausgestaltung einer Vorrichtung, die dazu eingerichtet ist, eine bevorzugte Ausführungsform eines erfindungsgemäßen Verfahrens durchzuführen.
- Figur 4: zeigt schematisch einen Teil eines Rohrbündelwärmetauschers, der im Zuge einer bevorzugten Ausführungsform eines erfindungsgemäßen Verfahrens bearbeitet wird.

### Ausführungsform(en) der Erfindung

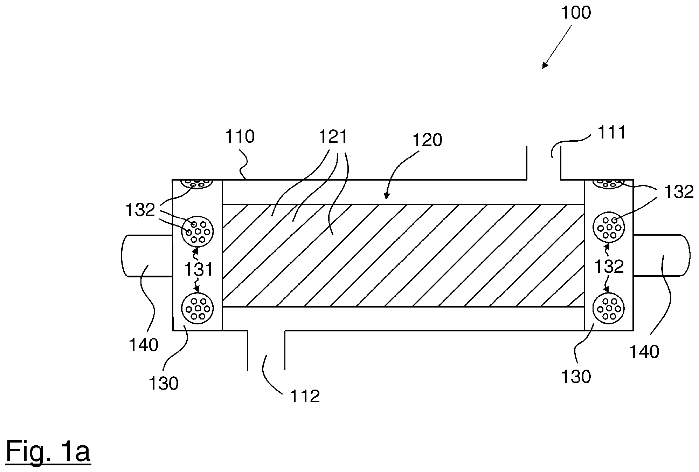

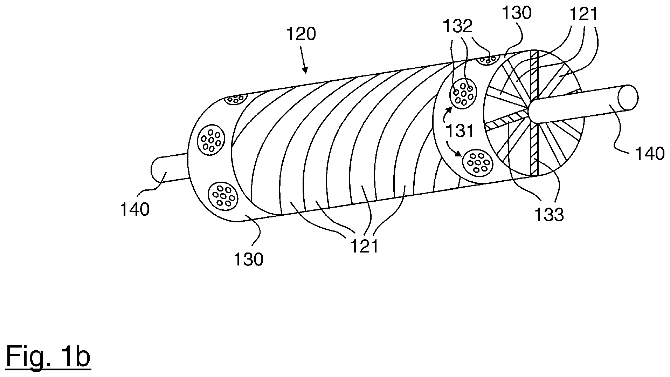

In Figur 1 ist eine bevorzugte Ausgestaltung eines Rohrbündelwärmetauschers 100 in Form eines gewickelten Rohrbündelwärmetauschers schematisch dargestellt, der mittels einer bevorzugten Ausführungsform eines erfindungsgemäßen Verfahrens gefertigt wurde.

In Figur 1a ist der Rohrbündelwärmetauscher 100 in einer Schnittansicht dargestellt. Der Rohrbündelwärmetauscher 100 weist einen Mantel 110 auf, der einen Fluid-Eingang 111 und einen Fluid-Ausgang 112 aufweist, um ein erstes Fluid durch den Mantel 110 zu leiten.

Innerhalb des Mantels 110 ist ein Rohrbündel 120 aus einer Vielzahl von Rohren 121 angeordnet. Durch die Rohre 121 kann ein zweites Fluid geleitet werden. Die Rohre 121 sind spiralförmig um ein Kernrohr 140 gewickelt. Die einzelnen Rohre 121 sind an Rohrböden 130 des Wärmetauschers 100 stoffschlüssig verbunden.

Die Rohrböden 130 weisen entlang ihres Umfangs Bohrungsbereiche 131 mit Bohrungen 132 auf, wobei jedes der Rohre 121 des Rohrbündels 120 an einer dieser Bohrungen 132 stoffschlüssig mit dem jeweiligen Rohrboden 130 verbunden ist.

Der Wärmetauscher 100, die Rohre 121 und die Rohrböden 130, sind beispielsweise aus einer Aluminium-Legierung gefertigt, z.B. aus einer Aluminium-Magnesium-Mangan-Legierung.

In Figur 1b ist ein Teil des gewickelten Rohrbündelwärmetauschers 100 (das Rohrbündel 120, die Rohrböden 130 und das Kernrohr 140) aus Figur 1a in einer perspektivischen Ansicht dargestellt. Wie in Figur 1b zu erkennen ist, sind die Rohrböden 130 beispielsweise über Stützarme 133 an dem Kernrohr 140 befestigt.

Um jedes der Rohre 121 an einer der Bohrungen 132 stoffschlüssig mit dem jeweiligen Rohrboden 130 zu verbinden, werden diese stoffschlüssigen Rohr-Rohrboden-Verbindungen im Zuge einer bevorzugten Ausführungsform des erfindungsgemäßen Verfahrens durch Laserschweißen mit Strahloszillation hergestellt.

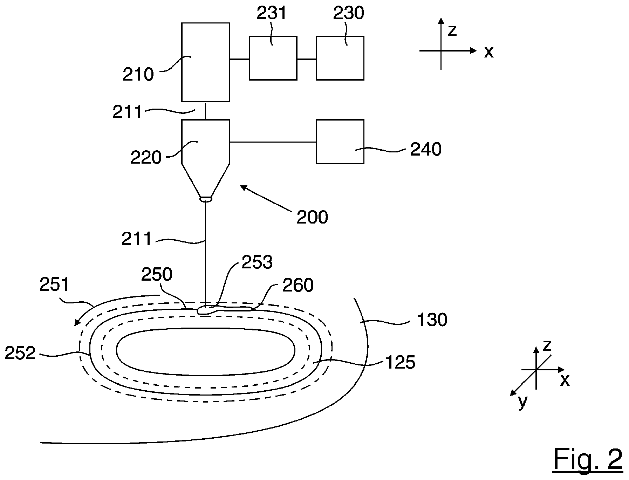

In Figur 2 ist schematisch eine bevorzugte Ausgestaltung einer Vorrichtung 200 zum Laserschweißen dargestellt, die dazu eingerichtet ist, eine derartige bevorzugte Ausführungsform des erfindungsgemäßen Verfahrens durchzuführen. In Figur 2 ist beispielhaft dargestellt, wie mit diesem Laserschweißgerät 200 eines der Rohre, in Figur 2 mit 125 bezeichnet, mit einem der Rohrböden 130 des gewickelten Rohrbündelwärmetauschers 100 gemäß Figur 1 im Zuge dessen Herstellungsprozesses stoffschlüssig verbunden werden kann.

Das Laserschweißgerät 200 weist einen Laser 210, beispielsweise einen Nd:YAG-Laser, und einen Laserkopf 220 auf. Der Laser 210 erzeugt einen Laserstrahl 211, der in den Laserkopf 220 eingekoppelt wird. In dem Laserkopf 220 sind zweckmäßige optische Elemente angeordnet, um den Laserstrahl 211 auf eine zu schweißende Stelle in einem Verbindungsbereich 250 zwischen dem Rohr 125 und dem Rohrboden 130 zu fokussieren.

Der fokussierte Laserstrahl 211 trifft auf der zu schweißenden Stelle in dem Verbindungsbereich 250 auf, wodurch das Rohr 125 und der Rohrboden 130 zumindest teilweise aufgeschmolzen werden, so dass ein Schmelzbad 253 entsteht. Wenn der Laserstrahl über den Verbindungsbereich bewegt wird, läuft der geschmolzene Werkstoff hinter dem Laserstrahl zusammen und erstarrt zu der Schweißnaht 260.

Das Laserschweißgerät 200 umfasst weiterhin ein erstes Steuergerät 230 und einen ersten Verfahrmechanismus 231, um eine erste Bewegung des Laserstrahls 211 zu erzeugen. Der Verfahrmechanismus 231 wird zu diesem Zweck von dem ersten Steuergerät 230 zweckmäßig angesteuert.

Mittels des Verfahrmechanismus 231 kann insbesondere das gesamte Laserschweißgerät 200, insbesondere sowohl der Laser 210 als auch der Laserkopf 220 gemeinsam, bewegt werden. Das Laserschweißgerät 200 kann im Zuge dessen beispielsweise sowohl um eine z-Achse, als auch um eine x-Achse gedreht werden.

Der Rohrboden 130 erstreckt sich dabei beispielsweise in einer Ebene aufgespannt durch die x-Achse und eine y-Achse, wobei die z-Achse senkrecht zu dieser Ebene orientiert ist.

Gemäß dieser ersten Bewegung oder Hauptbewegung wird der Laserstrahls 211 über den Verbindungsbereich entlang einer ersten Richtung 251 bewegt. Diese erste Richtung 251 entspricht insbesondere einer Haupterstreckungsrichtung des Verbindungsbereichs bzw. einer Haupterstreckungsrichtung der erzeugten Schweißnaht 260. Weiterhin verläuft diese erste Richtung 251 insbesondere parallel zu einem Umfang 252 des Rohrs 125.

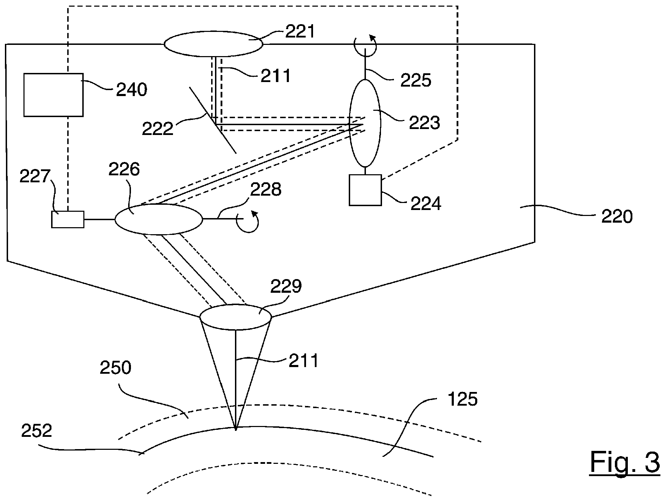

Weiterhin sind ein zweites Steuergerät 240 und ein zweiter Verfahrmechanismus vorgesehen, um eine zweite Bewegung des Laserstrahls 211 zu erzeugen. Der zweite Verfahrmechanismus wird weiter unten in Bezug auf Figur 3 detailliert erläutert. Es sei darauf hingewiesen, dass das erste Steuergerät 230 und das zweite Steuergerät 240 in einem gemeinsamen Steuergerät kombiniert untergebracht sein können. Gleiches gilt für die beiden Verfahrmechanismen.

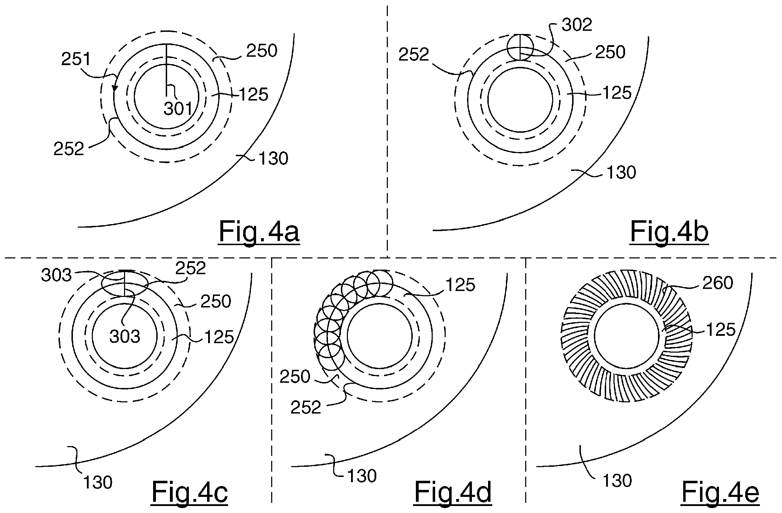

Mittels des zweiten Verfahrmechanismus können einzelne optische Elemente in dem Laserkopf 220 bewegt werden, wodurch der ersten Bewegung des Laserstrahls 211 eine zweite Bewegung überlagert wird. Diese zweite Bewegung wird weiter unten in Bezug auf Figur 4 detailliert erläutert.

In Figur 3 ist der Laserkopf 220 aus Figur 2 schematisch in einer Schnittansicht dargestellt. Der vom Laser 210 erzeugte Laserstrahl 211 wird durch eine Linse 221 in den Laserkopf eingekoppelt und trifft darin in diesem Beispiel zunächst auf einen Umlenkspiegel 222. Der Laserstrahl 211 trifft daraufhin auf einen ersten drehbaren Spiegel 223 und danach auf einen zweiten drehbaren Spiegel 226. Anschließend trifft der Laserstrahl 211 auf eine Fokussierlinse 229, wonach er den Laserkopf verlässt.

Die drehbaren Spiegel 223 und 226 können jeweils beispielsweise als Hohlspiegel ausgebildet sein. Der erste Spiegel 223 kann durch einen ersten Verstellmechanismus 224 um eine erste Achse 225 gedreht werden. Der zweite Spiegel 226 kann durch einen zweiten Verstellmechanismus 227 um eine zweite Achse 228 gedreht werden. Die Achsen 225 und 228 stehen insbesondere senkrecht aufeinander. Die Verstellmechanismen 224 und 227 bilden zusammen den oben erläuterten zweiten Verfahrmechansimus zum Erzeugen der zweiten Bewegung des Laserstrahls 211.

Das zweite Steuergerät 240 steuert zu diesem Zweck die Verstellmechanismen 224 und 227 an, um die drehbaren Spiegel 223 und 226 entsprechend zu drehen, um die zweite Bewegung des Laserstrahls 211 der ersten Bewegung zu überlagern.

In Figur 4 sind Beispiele für die erste und die zweite Bewegung des Laserstrahls schematisch dargestellt, welche im Zuge einer bevorzugten Ausführungsform eines erfindungsgemäßen Verfahrens durchgeführt werden können. In den Figuren 4a bis 4e sind jeweils das Rohr 125 und ein Teil des Rohrbodens 130 schematisch in einer Draufsicht dargestellt.

In Figur 4a ist ein Beispiel für die erste Bewegung des Laserstrahls 211 schematisch dargestellt. Die erste Bewegung verläuft dabei in dem Verbindungsbereich 250 entlang des Umfangs 252 des Rohrs 125. Die erste Bewegung ist somit eine Kreisbewegung um den Mittelpunkt des Rohrs 125, die erste Bewegungsrichtung 251 verläuft parallel zu dem Umfang 252 des Rohrs 125. Ein Radius 301 dieser Kreisbewegung entspricht dabei beispielsweise dem Außenradius des Rohrs 125.

In Figur 4b ist ein Beispiel für die zweite Bewegung des Laserstrahls 211 schematisch dargestellt. Die zweite Bewegung ist in diesem Beispiel ebenfalls eine Kreisbewegung. Der Durchmesser 302 dieser Kreisbewegung entspricht in diesem Beispiel einer Breite des Verbindungsbereichs 250. Insbesondere entspricht der Durchmesser 301 dieser Kreisbewegung ebenfalls der Breite der Schweißnaht 260.

Die zweite Bewegung kann beispielsweise auch ellipsenförmig sein, wie in Figur 4c dargestellt ist. In diesem Beispiel entspricht beispielsweise die doppelte Länge der kleinen Halbachse 303 der entsprechenden Ellipse der Breite des Verbindungsbereichs 250 und weiter insbesondere der Breite der Schweißnaht 260.

In Figur 4d ist ein Beispiel für die Bewegung des Laserstrahls 211 als eine Überlagerung der ersten Bewegung gemäß Figur 4a und der zweiten Bewegung gemäß Figur 4b schematisch dargestellt. Der Laserstrahl 211 wird über den Verbindungsbereich 250 somit als Überlagerung einer Kreisbewegung mit Radius 301 und einer Kreisbewegung mit Durchmesser 302 bewegt. Der Mittelpunkt der zweiten Bewegung in Form der Kreisbewegung gemäß Figur 4b liegt dabei beispielsweise auf dem Umfang 252 des Rohrs 125.

Für eine positive Beeinflussung der Schmelzbaddynamik und eine gezielte Modifizierung der entstehenden Dampfkapillare beim Laserschweißen, insbesondere beim Tiefschweißen mit vergleichsweise hohen Laserstrahlintensitäten (vgl. die zugehörigen Ausführungen weiter oben in der Beschreibung) wird die zweite Bewegung mit einer transversalen Auslenkung zwischen 0,15 und 0,25 mm und einer longitudinalen Auslenkung von 0,15 bis 0,25 mm vorgenommen. Ist die longitudinale und die transversale Auslenkung gleich, kommt es zu einer kreisförmigen zweiten Bewegung, andernfalls erhält man eine elliptische zweite Bewegung. Eine kreisförmige zweite Bewegung mit einer transversalen und longitudinalen Auslenkung von 0,23 mm hat sich als besonders vorteilhaft erwiesen. Die Frequenz dieser zweiten Bewegung liegt hierbei im Bereich von 3000 - 4500 Hz, insbesondere ist eine Frequenz von 3500 Hz besonders vorteilhaft. Auf diese Weise kann durch die zweite Bewegung die Gefahr einer Porosität in der Schweißverbindung stark vermindert werden.

In Figur 4e ist ein Beispiel für hergestellte Rohr-Rohrbodenverbindung dargestellt. Durch die Bewegung des Laserstrahls 211 gemäß Figur 4d werden das Rohr 125 und der Rohrboden 130 insbesondere über die gesamte Breite des Verbindungsbereichs aufgeschmolzen. Nachdem die Schmelze erstarrt ist, wurde somit die Schweißnaht 260 erzeugt, wobei die Breite der Schweißnaht 260 der Breite des Verbindungsbereichs 250 entspricht.

### Bezugszeichenliste

- 100: Rohrbündelwärmetauscher, gewickelte Rohrbündelwärmetauscher
- 110: Mantel
- 111: Fluid-Eingang
- 112: Fluid-Ausgang
- 120: Rohrbündel
- 121: Rohre
- 125: Rohr
- 130: Rohrböden
- 131: Bohrungsbereich
- 132: Bohrungen
- 133: Stützarme
- 140: Kernrohr
- 200: Laserschweißgerät, Vorrichtung zum Laserschweißen
- 210: Laser, Nd:YAG-Laser
- 211: Laserstrahl
- 220: Laserkopf
- 221: Linse
- 222: Umlenkspiegel
- 223: erster drehbarer Spiegel, Hohlspiegel
- 224: erster Verstellmechanismus
- 225: erste Achse
- 226: zweiter drehbarer Spiegel, Hohlspiegel
- 227: zweiter Verstellmechanismus
- 228: zweiter Achse
- 229: Fokussierlinse
- 230: erstes Steuergerät
- 231: erster Verfahrmechanismus
- 240: zweites Steuergerät
- 250: Verbindungsbereich
- 251: ersten Richtung; Haupterstreckungsrichtung der Schweißnaht
- 252: Umfang des Rohrs 125
- 253: Schmelzbad
- 260: Schweißnaht
- 301: Radius der kreisförmigen ersten Bewegung
- 302: Durchmesser der kreisförmigen zweiten Bewegung
- 303: kleine Halbachse der ellipsenförmigen zweiten Bewegung

## Patentansprüche

1. Verfahren zum Verbinden von Rohren (121, 125) eines Rohrbündelwärmetauschers (100) mit einem Rohrboden (130) des Rohrbündelwärmetauschers (100),
**dadurch gekennzeichnet, dass**:
- der Rohrbündelwärmeaustauscher mehrere hundert, mehrere tausend oder auch insbesondere mehrere zehntausend Rohre aufweist,
- die Rohre (121, 125) mittels Laserschweißens mit dem Rohrboden (130) stoffschlüssig verbunden werden, im Zuge dessen ein Laserstrahl (211) erzeugt und auf eine zu schweißende Stelle in einem Verbindungsbereich (250) zwischen Rohr (125) und Rohrboden (130) fokussiert wird,
- der Laserstrahl (211) derart bewegt wird, dass er eine erste Bewegung über den Verbindungsbereich (250) hinweg und eine der ersten Bewegung überlagerte zweite Bewegung vollzieht, die unterschiedlich zu der ersten Bewegung ist und
- die zweite Bewegung eine kreisförmige und/oder elliptische Bewegung ist,
- die Rohre (121) und/oder der Rohrboden (130) jeweils aus einer Aluminium-Legierung gefertigt sind, und wobei
- die zweite Bewegung mit einer Frequenz von 3000 - 4500 Hz erfolgt.

2. Verfahren nach Anspruch 1, wobei eine entstehende Dampfkapillare zu einer länglichen oder ovalen Form hin modifiziert wird.

3. Verfahren nach Anspruch 1 oder 2, wobei durch die erste Bewegung eine Haupterstreckungsrichtung (251) einer Schweißnaht (260) vorgegeben wird und/oder wobei durch die zweite Bewegung eine Breite (302) der Schweißnaht (260) vorgegeben wird.

4. Verfahren nach einem der vorstehenden Ansprüche, wobei die erste Bewegung und/oder die zweite Bewegung durch Bewegung einzelner optischer Elemente (223, 226) in einem Strahlengang des Laserstrahls (211) erzeugt werden.

5. Verfahren nach Anspruch 4, wobei wenigstens ein Spiegel (223, 226) in dem Strahlengang des Laserstrahls (211) gedreht wird.

6. Verfahren nach einem der vorstehenden Ansprüche, wobei die erste Bewegung und/oder die zweite Bewegung erzeugt werden, indem eine Vorrichtung zum Laserschweißen (200) oder ein Teil einer Vorrichtung zum Laserschweißen (200) bewegt wird.

7. Verfahren nach Anspruch 6, wobei ein Laserkopf (220) der Vorrichtung zum Laserschweißen (200) bewegt wird.

8. Verfahren nach einem der vorstehenden Ansprüche, wobei die erste Bewegung eine kreisförmige Bewegung ist, deren Radius (301) im Wesentlichen oder ganz dem Radius eines Rohrs (125) entspricht.

9. Verfahren nach einem der vorstehenden Ansprüche, wobei die zweite Bewegung ferner eine translatorische in ihrer Richtung alternierende Bewegung ist.

10. Verfahren nach einem der vorstehenden Ansprüche, wobei die zweite Bewegung mit einer transversalen Auslenkung von 0,15 - 0,25 mm, insbesondere 0,23 mm, und/oder mit einer longitudinalen Auslenkung von 0,15 - 0,25 mm, insbesondere 0,23 mm, vorgenommen wird.

11. Verfahren nach einem der vorstehenden Ansprüche, wobei die zweite Bewegung mit einer Frequenz von 3500 Hz erfolgt.

12. Verfahren nach einem der vorstehenden Ansprüche, wobei die Rohre (121) und der Rohrboden (130) eines Geradrohr-Wärmetauscher, eines U-Rohr-Wärmetauscher oder eines gewickelten Rohrbündelwärmetauscher (100) miteinander verbunden werden.

13. Verfahren nach einem der vorstehenden Ansprüche, wobei der Laserstrahl (211) durch einen CO₂-Laser, CO-Laser, Festkörperlaser, Nd:YAG-Laser (210), Nd-Glas-Laser, Erbium-YAG-Laser, Scheibenlaser, Faserlaser und/oder Diodenlaser erzeugt wird.

## Claims

1. Method of connecting tubes (121, 125) of a tube bundle heat exchanger (100) to a tube base (130) of the tube bundle heat exchanger (100),
**characterized in that**
- the tube bundle heat exchanger has several hundreds, several thousands or, in particular, several tens of thousands of tubes,
- the tubes (121, 125) are connected in a firmly bonded manner to the tube base (130) by means of laser welding, in the course of which a laser beam (211) is generated and focused on a point to be welded in a connection area (250) between the tube (125) and the tube base (130),
- the laser beam (211) is moved in such a way that it performs a first movement across the connection area (250) and a second movement superimposed on the first movement, which is different from the first movement, and
- the second movement is a circular and/or elliptical movement,
- the tubes (121) and/or the tube base (130) are each made of an aluminum alloy, and wherein
- the second movement occurs at a frequency of 3000 - 4500 Hz.

2. Method according to claim 1, wherein a resulting vapor capillary is modified to an elongated or oval shape.

3. Method according to claim 1 or 2, wherein a main extension direction (251) of a weld seam (260) is predetermined by the first movement and/or wherein a width (302) of the weld seam (260) is predetermined by the second movement.

4. Method according to one of the preceding claims, wherein the first movement and/or the second movement are generated by moving individual optical elements (223, 226) in a beam path of the laser beam (211).

5. Method according to claim 4, wherein at least one mirror (223, 226) is rotated in the beam path of the laser beam (211).

6. Method according to one of the preceding claims, wherein the first movement and/or the second movement are generated by moving a device for laser welding (200) or a part of a device for laser welding (200).

7. Method according to claim 6, wherein a laser head (220) of the device for laser welding (200) is moved.

8. Method according to one of the preceding claims, wherein the first movement is a circular movement having a radius (301) substantially or entirely equal to the radius of a tube (125).

9. Method according to one of the preceding claims, wherein the second movement is further a translational movement alternating in its direction.

10. Method according to one of the preceding claims, wherein the second movement is undertaken with a transverse deflection of 0.15 - 0.25 mm, in particular 0.23 mm, and/or with a longitudinal deflection of 0.15 - 0.25 mm, in particular 0.23 mm.

11. Method according to one of the preceding claims, wherein the second movement is at a frequency of 3500 Hz.

12. Method according to one of the preceding claims, wherein the tubes (121) and the tube base (130) of a straight tube heat-exchanger, a U-tube heat exchanger, or a coiled tube bundle heat exchanger (100) are connected to each other.

13. Method according to one of the preceding claims, wherein the laser beam (211) is generated by a CO₂ laser, CO laser, solid state laser, Nd:YAG laser (210), Nd glass laser, erbium YAG laser, disk laser, fiber laser, and/or diode laser.

## Revendications

1. Procédé de raccordement de tubes (121, 125) d'un échangeur thermique à faisceau tubulaire (100) à une plaque tubulaire (130) d'un échangeur thermique à faisceau tubulaire (100),
**caractérisé en ce que :**
- l'échangeur thermique à faisceau tubulaire comprend plusieurs centaines, plusieurs milliers ou également en particulier plusieurs dizaines de milliers de tubes,
- les tubes (121, 125) sont reliés par liaison de matière à la plaque tubulaire (130) au moyen d'un soudage au laser au cours duquel un faisceau laser (211) est généré et focalisé en un point à souder dans une zone de liaison (250) entre le tube (125) et la plaque tubulaire (130),
- le faisceau laser (211) est déplacé de telle sorte qu'il effectue un premier déplacement tout au long de la zone de liaison (250) et un deuxième déplacement superposé au premier déplacement, qui est différent du premier déplacement et
- le deuxième déplacement est un déplacement circulaire et/ou elliptique,
- les tubes (121) et/ou la plaque tubulaire (130) sont fabriqués respectivement à partir d'un alliage d'aluminium et dans lequel
- le deuxième déplacement est effectué à une fréquence de 3 000 à 4 500 Hz.

2. Procédé selon la revendication 1, dans lequel un capillaire de vapeur résultant est modifié en une forme allongée ou ovale.

3. Procédé selon la revendication 1 ou 2, dans lequel une direction d'extension principale (251) d'un joint de soudure (260) est définie par le premier déplacement et/ou dans lequel une largeur (302) du joint de soudure (260) est définie par le deuxième déplacement.

4. Procédé selon l'une quelconque des revendications précédentes, dans lequel le premier déplacement et/ou le deuxième déplacement sont produits par le déplacement d'éléments optiques individuels (223, 226) dans un chemin optique du faisceau laser (211).

5. Procédé selon la revendication 4, dans lequel au moins un miroir (223, 226) est entraîné en rotation dans le chemin optique du faisceau laser (211).

6. Procédé selon l'une quelconque des revendications précédentes, dans lequel le premier déplacement et/ou le deuxième déplacement sont produits en ce qu'un dispositif de soudage au laser (200) ou une partie d'un dispositif de soudage au laser (200) est déplacé(e).

7. Procédé selon la revendication 6, dans lequel une tête de laser (220) du dispositif de soudage au laser (200) est déplacée.

8. Procédé selon l'une quelconque des revendications précédentes, dans lequel le premier déplacement est un déplacement circulaire, dont le rayon (301) correspond essentiellement ou totalement au rayon d'un tube (125).

9. Procédé selon l'une quelconque des revendications précédentes, dans lequel le deuxième déplacement est en outre un déplacement de translation à direction alternée.

10. Procédé selon l'une quelconque des revendications précédentes, dans lequel le deuxième déplacement est effectué avec une amplitude transversale de 0,15 à 0,25 mm, en particulier de 0,23 mm et/ou avec une amplitude longitudinale de 0,15 à 0,25 mm, en particulier de 0,23 mm.

11. Procédé selon l'une quelconque des revendications précédentes, dans lequel le deuxième déplacement est effectué à une fréquence de 3 500 Hz.

12. Procédé selon l'une quelconque des revendications précédentes, dans lequel les tubes (121) et la plaque tubulaire (130) d'un échangeur thermique à tubes droits, d'un échangeur thermique à tubes en U ou d'un échangeur thermique à faisceau tubulaire enroulé (100) sont reliés les uns aux autres.

13. Procédé selon l'une quelconque des revendications précédentes, dans lequel le faisceau laser (211) est produit par un laser à CO₂, un laser à CO, un laser solide, un laser Nd:YAG (210), un laser Nd-verre, un laser Erbium-YAG, un laser à disque, un laser à fibre et/ou un laser à diode.
